# EUROPEAN PATENT APPLICATION

(11) **EP 3 040 117 A1**
(43) Date of publication of application: **06.07.2016**
(21) Application number: 14200377.1
(22) Date of filing: 29.12.2014
(51) Int. Cl.: B01J 13/00

(54) **Ether cross-linked chondroitin sulfate hydrogels and their use for soft tissue applications**

(71) Applicant: Galderma S.A., 6330 Cham (CH)
(72) Inventor: Karlsson, Anders, 74340 Storvreta (SE)
(74) Representative: Awapatent AB

(57) **Abstract**

A process of preparing a hydrogel product comprising cross-linked chondroitin sulfate is comprising the steps of: (a) providing chondroitin sulfate; and (b) cross-linking the chondroitin sulfate by ether bonds using a bi- or polyfunctional cross-linking agent in a single-step reaction. The resulting hydrogel product is useful for treatment of soft tissue disorders.

## Description

### Technical field of the invention

The present invention relates to the field of hydrogels containing cross-linked polysaccharides and the use of such hydrogels in medical and/or cosmetic applications. More specifically, the present invention is concerned with hydrogels made of cross-linked chondroitin sulfate.

### Background to the invention

Water-absorbing gels, or hydrogels, are widely used in the biomedical field. They are generally prepared by chemical crosslinking of polymers to infinite networks. While many polysaccharides absorb water until they are completely dissolved, cross-linked gels of the same polysaccharides can typically absorb a certain amount of water until they are saturated, i.e. they have a finite liquid retention capacity, or swelling degree.

Chondroitin sulfate is a well-known biocompatible polymer. It is a naturally occurring polysaccharide belonging to the group of glycosaminoglycans (GAGs) together with e.g. hyaluronic acid. All GAGs are negatively charged heteropolysaccharide chains which have a capacity to absorb large amounts of water. Hyaluronic acid is widely used in the biomedical and cosmetic fields, for instance during viscosurgery and as a dermal filler.

Chondroitin sulfate (CS) is a highly abundant GAG found in the connective tissues of mammals where it, together with other sulfated GAGs, is bound to proteins as part proteoglycans. It has previously been shown that hydrogels containing CS successfully can be used in biomedical applications due to their resemblance to the natural extra cellular matrix (Lauder, R.M., Complement Ther Med 17: 56-62, 2009). Chondroitin sulfate is also used in the treatment of osteoarthritis, e.g. as a dietary supplement.

### Summary of the invention

It is an object of the present invention to provide efficient preparation of a hydrogel having chondroitin sulfate as the swellable polymer.

It is also an object of the present invention to provide preparation of a chondroitin sulfate hydrogel in a single-step cross-linking reaction.

For these and other objects that will be evident from this disclosure, the present invention provides according to a first aspect a process of preparing a hydrogel product comprising cross-linked chondroitin sulfate, comprising the steps of:
(a) providing chondroitin sulfate; and
(b) cross-linking the chondroitin sulfate by ether bonds using a bi- or polyfunctional cross-linking agent in a single-step reaction.

In a preferred embodiment, step (b) further comprises providing particles of the cross-linked chondroitin, having an average size in the range of 0.01-5 mm, preferably 0.1-0.8 mm.

In some embodiments, the chondroitin chains are cross-linked to each other via a linking group which is derived from a bi- or polyfunctional cross-linking agent, such as a bis- or polyepoxide, such as a diglycidyl ether. A preferred group of bi- or polyfunctional cross-linking agents are 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane. In one embodiment, the bi- or polyfunctional cross-linking agent is 1,4-butanediol diglycidyl ether (BDDE). In another embodiment, the bi- or polyfunctional cross-linking agent is divinyl sulfone.

In certain embodiments, the cross-linking step (b) proceeds for 10 min - 48 h, such as for 10 min - 45 min.

In some embodiments, the cross-linking step (b) occurs at a temperature in the range of 0-80°C, such as 60-80°C.

In certain embodiments, the cross-linking step (b) occurs at a pH in the range of 9-13, such as 11-13.

According to related aspect, the present invention also provides use of the resulting hydrogel product as a medicament, such as in the treatment of soft tissue disorders. There is provided a method of treating a patient suffering from a soft tissue disorder by administering to the patient a therapeutically effective amount of the hydrogel product. There is also provided a method of providing corrective or aesthetic treatment to a patient by administering to the patient a therapeutically effective amount of the hydrogel product.

Other aspects and preferred embodiments of the present invention will be evident from the following detailed disclosure of the invention and the appended claims.

### Brief description of the drawings

Fig. 1 shows the structure of the chondroitin sulfate (CS) disaccharide repeating unit consisting of alternating D-glucuronic acid and N-acetyl-D-galactosamine moieties, also showing the sulfation pattern where the hydroxyl group(s) is (are) substituted by a sulfate group(s) (R=SO₃H).
Fig. 2 is a general scheme illustrating the cross-linking between two hydroxyl groups on the chondroitin sulfate backbone by ether bonds, in this case using a bifunctional epoxide.

### Itemized listing of preferred embodiments

1. A process of preparing a hydrogel product comprising cross-linked chondroitin sulfate, comprising the steps of:
   (a) providing chondroitin sulfate; and
   (b) cross-linking the chondroitin sulfate by ether bonds using a bi- or polyfunctional cross-linking agent in a single-step reaction.
2. A process according to embodiment 1, wherein step (b) further comprises providing particles of the cross-linked chondroitin sulfate, having an average size in the range of 0.01-5 mm, preferably 0.1-0.8 mm.
3. A process according to any one of embodiments 1-2, wherein the bi- or polyfunctional crosslinking agent of step (b) is divinyl sulfone or a bis- or polyepoxide.
4. A process according to embodiment 3, wherein said bi- or polyfunctional cross-linking agent is a diglycidyl ether.
5. A process according to embodiment 3, wherein said bi- or polyfunctional cross-linking agent is selected from the group consisting of 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane.
6. A process according to embodiment 5, wherein said bi- or polyfunctional cross-linking agent is 1,4-butanediol diglycidyl ether (BDDE).
7. A process according to embodiment 3, wherein said bi- or polyfunctional cross-linking agent is divinyl sulfone.
8. A process according to any one of embodiments 1-7, wherein the cross-linking step (b) proceeds for 10 min - 48 h.
9. A process according to embodiment 8, wherein the cross-linking step (b) proceeds for 10 min - 45 min.
10. A process according to any one of embodiments 1-9, wherein the cross-linking step (b) occurs at a temperature in the range of 0-80°C.
11. A process according to embodiment 10, wherein the cross-linking step (b) occurs at a temperature in the range of 60-80°C.
12. A process according to any one of embodiments 1-11, wherein the cross-linking step (b) occurs at a pH in the range of 9-13.
13. A process according to embodiment 12, wherein the cross-linking step (b) occurs at a pH in the range of 11-13.
14. A hydrogel product obtainable by the process according to any one of embodiments 1-13.
15. A hydrogel product according to embodiment 14 for use as a medicament.
16. A hydrogel product according to embodiment 15 for use in the treatment of soft tissue disorders.
17. Use of a hydrogel product according to embodiment 14, for the manufacture of a medicament for treatment of soft tissue disorders.
18. A method of treating a patient suffering from a soft tissue disorder by administering to the patient a therapeutically effective amount of a hydrogel product according to embodiment 14.
19. A method of providing corrective or aesthetic treatment to a patient by administering to the patient a therapeutically effective amount of a hydrogel product according to embodiment 14.
20. A method of cosmetically treating skin, which comprises administering to the skin a hydrogel product according to embodiment 14.

### Detailed description of the invention

The present invention provides advantageous processes for preparing hydrogels made of cross-linked chondroitin sulfate, the resulting hydrogel products and uses thereof. In the hydrogel products according to the invention, the cross-linked chondroitin sulfate is the swellable polymer which provides the gel properties.

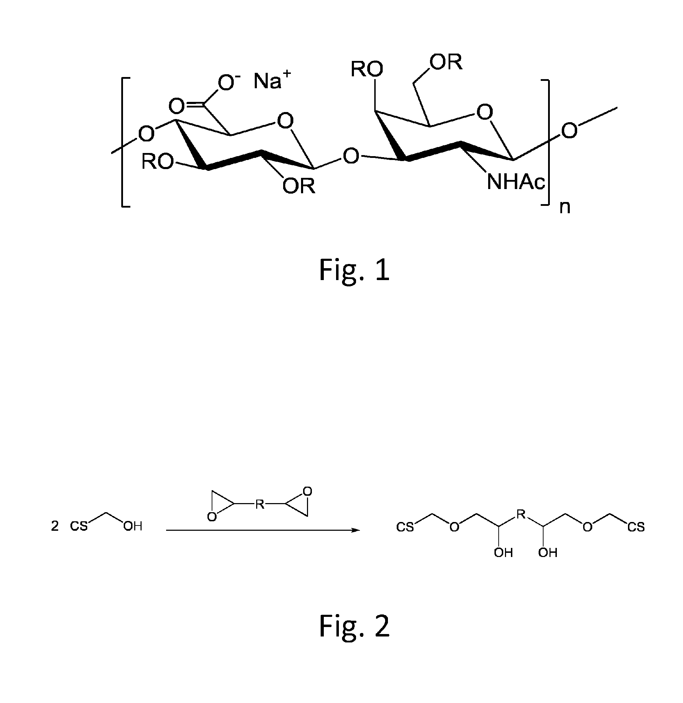

The term "chondroitin sulfate" refers to GAGs having as a disaccharide repeating unit (CS) the general structure shown in Fig. 1, consisting of alternating D-glucuronic acid and N-acetyl-D-galactosamine moieties. As shown in Fig. 1, the at least one sulfate moiety can be present in various different positions. Preferred chondroitin sulfate molecules are chondroitin-4-sulfate and chondroitin-6-sulfate.

The chondroitin sulfate can be obtained from various sources of animal and non-animal origin. Sources of non-animal origin include yeast and preferably bacteria. The molecular weight of a single chondroitin sulfate molecule is typically in the range of 1-500 kDa, but other molecular weights are possible.

Crosslinked chondroitin sulfate comprises cross-links between the chondroitin sulfate chains, which creates a continuous network of chondroitin sulfate molecules which is held together by the covalent cross-links, physical entangling of the chondroitin sulfate chains and various interactions, such as electrostatic interactions, hydrogen bonding and van der Waals forces.

The cross-linked chondroitin sulfate product is preferably biocompatible. This implies that no, or only very mild, immune response occurs in the treated individual. That is, no or only very mild undesirable local or systemic effects occur in the treated individual.

The cross-linked chondroitin sulfate product according to the invention may be a gel, or a hydrogel. That is, it can be regarded as a water-insoluble, but substantially dilute crosslinked system of chondroitin sulfate molecules when subjected to a liquid, typically an aqueous liquid.

The gel contains mostly liquid by weight and can e.g. contain 90-99.9%, water, but it behaves like a solid due to a three-dimensional cross-linked chondroitin sulfate network within the liquid. Due to its significant liquid content, the gel is structurally flexible and similar to natural tissue, which makes it very useful as a scaffold in tissue engineering and for tissue augmentation. It is also useful for treatment of soft tissue disorder and for corrective or aesthetic treatment. It is preferably used as an injectable formulation.

Cross-linking of the chondroitin sulfate may be achieved by modification with a cross-linking agent. The chondroitin sulfate concentration and the extent of cross-linking affect the mechanical properties, e.g. the elastic modulus G', and stability properties, of the gel. Cross-linked chondroitin sulfate gels can be characterized in terms of "degree of modification". The degree of modification of chondroitin sulfate gels generally range between 0.1 and 15 mole%. The degree of modification (mole%) describes the amount of cross-linking agent(s) that is bound to chondroitin sulfate, i.e. molar amount of bound cross-linking agent(s) relative to the total molar amount of repeating CS disaccharide units. The degree of modification reflects to what degree the chondroitin sulfate has been chemically modified by the cross-linking agent. Reaction conditions for ether cross-linking and suitable analytical techniques for determining the degree of modification are all well known to the person skilled in the art, who easily can adjust these and other relevant factors and thereby provide suitable conditions to obtain a desirable degree of modification and verify the resulting product characteristics with respect to the degree of modification. A BDDE (1,4-butandiol diglycidylether) cross-linked chondroitin sulfate gel may for example be prepared according to the method described for hyaluronic acid in Examples 1 and 2 of published international patent application WO 9704012.

Chondroitin sulfate gels may also comprise a portion of chondroitin sulfate which is not cross-linked, i.e not bound to the three-dimensional cross-linked chondroitin sulfate network. However, it is preferred that at least 50 % by weight, preferably at least 60 % by weight, more preferably at least 70 % by weight, and most preferably at least 80 % by weight, of the chondroitin sulfate in a gel composition form part of the cross-linked chondroitin sulfate network.

The cross-linked chondroitin sulfate is preferably present in the form of gel particles. The gel particles preferably have an average size in the range of 0.01-5 mm, preferably 0.1-0.8 mm, such as 0.2-0.5 mm or 0.5-0.8 mm.

The hydrogel product may be present in an aqueous solution, but it may also be present in dried or precipitated form, e.g. in ethanol. The hydrogel product is preferably injectable.

Since the nature of the product obtainable by the processes according to the invention is complex, the product may also be defined as being the result of these processes.

The hydrogel product may prepared by a process comprising the steps of:
(a) providing chondroitin sulfate; and
(b) cross-linking the chondroitin sulfate by ether bonds using a bi- or polyfunctional cross-linking agent in a single-step reaction.

The chondroitin sulfate chains are cross-linked to each other via a linking group which is derived from a bi- or polyfunctional cross-linking agent. The bi- or polyfunctional crosslinking agent connects the chondroitin sulfate chains to each other via hydroxyl groups on the chondroitin backbone. The bi-or polyfunctional crosslinking agent further acts as a spacer between the chondroitin sulfate chains in the cross-linked product.

The bi- or polyfunctional crosslinking agent comprises two or more functional groups capable of reacting with functional hydroxyl groups of the chondroitin sulfate, resulting in the formation of covalent bonds. The bi- or polyfunctional crosslinking agent may for example be selected from the group consisting of divinyl sulfone, multiepoxides and diepoxides.

A preferred type of bi- or polyfunctional cross-linking agent is a bis- or polyepoxide, such as a diglycidyl ether. It is preferred to perform the cross-linking under alkaline conditions, such as at a pH above 9, e.g. in the range of 9-12. According to an embodiment, the bi- or polyfunctional crosslinking agent comprises two or more glycidyl ether functional groups. The glycidyl ether functional groups react with primary hydroxyl groups of the chondroitin sulfate, resulting in the formation of ether bonds. It follows that when a diglycidyl ether cross-linking agent reacts with the primary hydroxyl groups of hyaluronan, two ether bonds are formed with an intermediate spacer remaining from the cross-linking agent,

Preferred bi- or polyfunctional cross-linking agent for cross-linking the chondroitin sulfate chains include 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane. A particularly preferred bi- or polyfunctional cross-linking agent is BDDE. Another preferred bi- or polyfunctional cross-linking agent is divinyl sulfone.

The process for generating the crosslinked hydrogel typically involves preparing a mixture of chondroitin sulfate (having a molecular weight of 1 - 500 kDa with preference to 25 - 250 kDa or even more preferred 50 - 100 kDa, at a concentration of 10 - 500 mg/mL with preference to 50 - 400 mg/mL or even more preferred 100 - 300 mg/mL) together with a cross-linking agent, such as divinyl sulfone or a multifunctional epoxide, with preference to diepoxides or specifically 1,4-butanediol diglycidyl ether (in a ratio of 0.01 - 100 molar equivalents to disaccharide units, with preference to 0.1 - 10 equivalents) in an alkaline solution, preferably an aqueous solution of an inorganic base, such as sodium hydroxide (0.1-10 wt%, or preferably 0.5-5 wt%). Incubating the mixture for 10 min - 48 h, either for a shorter period of 10-60 min or 10 45 min, or for a longer period of 1-48 h at a temperature in the range of 0-80°C, with preference to 10-70°C, such as 20-60°C, or with preference to 60-80°C, e.g. 70-80°C, yields a hydrogel. The hydrogel is preferably micronized to hydrogel particles in the size of 0.01 - 5 mm that subsequently are washed in excess aqueous solution such as phosphate buffered saline, sodium chloride or deionized water.

A typical application of the resulting macromolecular structures involves the preparation of injectable formulations for treatment of soft tissue disorders, including, but not limited to, corrective and aesthetic treatments.

Without desiring to be limited thereto, the present invention will in the following be illustrated by way of examples.

### Examples

### Example 1 - Preparation of an ether cross-linked chondroitin sulfate hydrogel with divinyl sulfone as cross-linking agent

Chondroitin sulfate (1 g) was mixed with 0.2 M sodium hydroxide (5-10 g) and divinyl sulfone (0.35 g). The mixture was shaken vigorously and then incubated for one hour at room temperature. The resulting hydrogel was washed and swelled to equilibrium in deionized water.

### Example 2 - Preparation of an ether cross-linked chondroitin sulfate hydrogel with BDDE as cross-linking agent.

Chondroitin sulfate (1 g) was mixed with 1 M NaOH (3.42 mL) and 1,4-butanediol diglycidyl ether (0.235-0.943 g). The mixture was shaken intensively and then incubated for one hour at 60°C. The gels were cut into particles and washed extensively with 0.9% sodium chloride prior to characterization.

The degree of modification, defined as the average number of CS disaccharides involved in a bond with BDDE, was determined by ¹H-NMR spectroscopy to be 34-107% (corresponding to the varied BDDE amounts as described above).

## Claims

1. A process of preparing a hydrogel product comprising cross-linked chondroitin sulfate, comprising the steps of:
(a) providing chondroitin sulfate; and
(b) cross-linking the chondroitin sulfate by ether bonds using a bi- or polyfunctional cross-linking agent in a single-step reaction.

2. A process according to claim 1, wherein the cross-linking step (b) occurs at a pH in the range of 11-13.

3. A process according to any one of claims 1-2, wherein the cross-linking step (b) occurs at a temperature in the range of 60-80°C.

4. A process according to any one of claims 1-3, wherein the cross-linking step (b) proceeds for 10 min - 45 min.

5. A process according to any one of claims 1-4, wherein the bi- or polyfunctional crosslinking agent of step (b) is divinyl sulfone or a bis- or polyepoxide.

6. A process according to claim 5, wherein said bi- or polyfunctional cross-linking agent is selected from the group consisting of 1,4-butanediol diglycidyl ether (BDDE), 1,2-bis(2,3-epoxypropoxy)ethylene (EGDGE) and ethylene glycol diglycidyl ether (EGDE), 1,2-ethanediol diglycidyl ether (EDDE) and diepoxyoctane.

7. A process according to claim 6, wherein said bi- or polyfunctional cross-linking agent is 1,4-butanediol diglycidyl ether (BDDE).

8. A process according to claim 5, wherein said bi- or polyfunctional cross-linking agent is divinyl sulfone.

9. A process according to any one of claims 1-8, wherein step (b) further comprises providing particles of the cross-linked chondroitin sulfate, having an average size in the range of 0.01-5 mm, preferably 0.1-0.8 mm.

10. A hydrogel product obtainable by the process according to any one of claims 1-9.

11. A hydrogel product according to claim 10 for use as a medicament.

12. A hydrogel product according to claim 11 for use in the treatment of soft tissue disorders.

13. A method of providing corrective or aesthetic treatment to a patient by administering to the patient a therapeutically effective amount of a hydrogel product according to claim 10.

14. A method of cosmetically treating skin, which comprises administering to the skin a hydrogel product according to claim 10.
